# FASCICULE DE BREVET EUROPEEN

(11) **EP 2 675 266 B1**
(45) Date de publication et mention de la délivrance du brevet: **16.11.2016**
(21) Numéro de dépôt: 12709910.9
(22) Date de dépôt: 15.02.2012
(51) Int. Cl.: A01D 78/10

(54) **MACHINE DE FENAISON**
HEUERNTEMASCHINE
HAYMAKING MACHINE

(30) Priorité: 17.02.2011 FR 1151307
(43) Date de publication de la demande: 25.12.2013
(73) Titulaire: KUHN S.A., 67700 Saverne (FR)
(72) Inventeur: HOERNER, Yannick, F-57660 Erstroff (FR)
(86) Numéro de dépôt international: PCT/FR2012/050324
(87) Numéro de publication internationale: WO 2012/110743

(56) Documents cités:
- EP-A1- 0 954 956
- EP-A1- 1 142 468
- EP-A1- 2 253 186
- FR-A1- 2 838 284
- FR-A1- 2 875 378

## Description

L'invention concerne une machine de fenaison, notamment une andaineuse de végétaux couchés sur le sol.

Les andaineuses sont adaptées à la récolte des fourrages coupés et étendus au sol, ces machines pourvues d'un rotor et d'outils mobiles permettent d'assembler les fourrages en andains destinés à être ramassés ultérieurement par exemple au moyen de presses.

Les andaineuses comportent une structure porteuse comprenant une poutre principale sur laquelle est articulé au moins un bras latéral qui est déplaçable autour d'un axe au moyen d'un vérin et qui porte au moins un rotor d'andainage. Les andaineuses comportent usuellement plusieurs rotors décalés le long de la structure porteuse de manière à couvrir une surface de travail importante lors du déplacement de l'engin agricole dans un champ ou un pré.

Les machines agricoles opèrent sur tous les types de terrains, de fait les outils et matériels utilisés par les agriculteurs doivent s'adapter en fonction du relief de ces terrains.

L'andaineuse est amenée à travailler dans des champs pouvant être en pente ou sur des terrains irréguliers, ou encore comportant des obstacles. Pour permettre ce travail, le rotor de l'andaineuse présente usuellement une certaine latitude de mouvement afin de suivre les contours du terrain, des dispositifs sont prévus par ailleurs pour soulever les outils.

La latitude de mouvement du rotor en fonctionnement n'est actuellement pas réglable et les débattements de l'outil de travail ne sont pas contrôlés d'une manière précise. En conséquence, l'articulation entre le bras support du rotor et le rotor est soumise à des contraintes importantes, il existe ainsi un besoin pour contrôler le débattement du rotor lors du travail et lors des déplacements.

Lorsque le travail dans le champ nécessite de soulever le rotor, pour passer un obstacle par exemple, ou lorsque le rotor est replié à la verticale pour le transport hors de la zone de travail, il est préférable qu'il n'y ait aucun mouvement intempestif qui pourrait entraîner des dommages pour l'articulation et le rotor lui-même si le rotor venait à heurter le bâti. Il apparait ainsi un problème qui est de bloquer le débattement du rotor lorsque celui-ci n'est pas en position de travail.

Le document EP 1 142 468 A1 décrit une machine de fenaison conforme au préambule de la revendication 1. Cette machine comporte un système de réglage permettant de limiter les mouvements du rotor dans la position de travail et de les bloquer dans la position de transport. Ce système se compose notamment de premières pattes solidaires du carter du rotor, lesquelles pattes pivotent autour d'un premier axe commun, ainsi que de deuxièmes pattes solidaires du bras supportant le rotor, lesquelles pattes pivotent autour d'un deuxième axe commun. Le premier axe est guidé à une extrémité dans un premier orifice oblong pratiqué dans une première languette solidaire du bras. Le deuxième axe est guidé à une extrémité dans un deuxième orifice oblong pratiqué dans une deuxième languette solidaire du carter. Ce système ne garantit pas le blocage du rotor lorsque celui-ci est transposé de la position de travail vers une position de manoeuvre permettant le passage au-dessus d'un obstacle ou d'un andain. En sus, le système de réglage connu n'assure pas le blocage du rotor dans ladite position de manoeuvre. Les éventuels mouvements possibles du rotor présentent alors un risque d'accrochage du rotor avec le sol, le bâti ou des personnes qui pourraient se trouver à proximité. Au travail, les mouvements du rotor ne sont en aucune manière amortis par le système de réglage. Ce dernier, ainsi que le bras portant le rotor, subissent donc des efforts importants.

L'invention a donc pour objectif de résoudre ces principales difficultés en proposant un dispositif de blocage des débattements possibles du rotor lorsque celui-ci se trouve hors de la configuration de travail.

Ainsi, l'invention concerne une machine de fenaison, plus particulièrement une andaineuse, comportant une structure porteuse comprenant une poutre principale sur laquelle est articulé au moins un bras latéral supportant au moins un rotor d'andainage, lequel rotor est relié à un dispositif porteur formant interface avec un support monté sur ledit bras latéral, lequel dispositif porteur permet au rotor des débattements afin de suivre les mouvements du terrain lorsque la machine fonctionne et se trouve en position de travail, la machine étant caractérisée en ce que le dispositif porteur comporte un système de réglage permettant de limiter les mouvements du rotor dans la position de travail et de les bloquer dans d'autres positions, et en ce que le système de réglage permettant de limiter les mouvements du rotor comporte d'une part un moyen de commande comprenant au moins un vérin hydraulique et d'autre part un dispositif de liaison déplaçable par le au moins un vérin hydraulique.

Les avantages du dispositif selon l'invention sont multiples :
- les débattements du rotor en fonctionnement sont contrôlés, et amortis dans une certaine mesure, par le ou les vérins hydrauliques, ce qui a pour effet de réduire les sollicitations mécaniques sur l'articulation entre le bras support du rotor et le rotor,
- en dehors de la position de fonctionnement le ou les vérins hydrauliques peuvent bloquer tout mouvement intempestif du rotor, ce qui amène une sécurité importante pour le transport de la machine,
- la synchronisation du ou des vérins hydrauliques avec un vérin de repliement du bras porteur du rotor permet d'éviter les accidents, notamment que le rotor percute la poutre principale, ladite synchronisation permet également avec une seule commande sur le poste de pilotage d'actionner deux éléments séparés, ce qui est favorable notamment pour le passage d'obstacles dans un
- champ et évite les erreurs possibles du conducteur dans l'ordonnancement des commandes des différents vérins,
- les vérins sont synchronisés et les différents éléments sont positionnés de manière à ce qu'une position intermédiaire soit réalisable dans laquelle le rotor est sensiblement parallèle au-dessus du sol, soulevé par exemple pour passer un obstacle, tout en étant immobilisé en débattement pour éviter des mouvements intempestifs.

D'autres caractéristiques et avantages de l'invention se dégageront de la description qui va suivre en regard des dessins annexés qui ne sont donnés qu'à titre d'exemples non limitatifs.
La figure 1 est une vue d'ensemble d'une andaineuse conforme à l'invention.
La figure 2 montre à plus grande échelle un rotor suivant une première variante de réalisation, en position de travail.
La figure 3 illustre un rotor suivant la première variante de réalisation, dans une position surélevée dans laquelle il est partiellement soulevé du sol, en position de repliement partiel pour passer par-dessus un obstacle ou pour les manoeuvres en bout de terrain.
La figure 4 montre un rotor suivant la première variante de réalisation, en position de transport. Le rotor est relevé dans une position verticale avec le bras latéral.
La figure 5 illustre une vue de face du dispositif de réglage suivant la première variante de réalisation.
La figure 6 montre une vue de côté du dispositif de réglage suivant la première variante de réalisation.
La figure 7 montre une vue de côté du dispositif de réglage suivant une deuxième variante de réalisation.
La figure 8 montre une vue de face du dispositif de réglage suivant la deuxième variante de réalisation.
La figure 9 montre une vue de côté du dispositif de réglage suivant une troisième variante de réalisation.
La figure 10 montre une vue de face du dispositif de réglage suivant la troisième variante de réalisation.
La figure 11 montre une vue de côté du dispositif de réglage suivant une quatrième variante de réalisation.
La figure 12 montre une vue de face du dispositif de réglage suivant la quatrième variante de réalisation.
La figure 13 montre une vue de côté du dispositif de réglage suivant une cinquième variante de réalisation.
La figure 14 montre une vue de face du dispositif de réglage suivant la cinquième variante de réalisation.

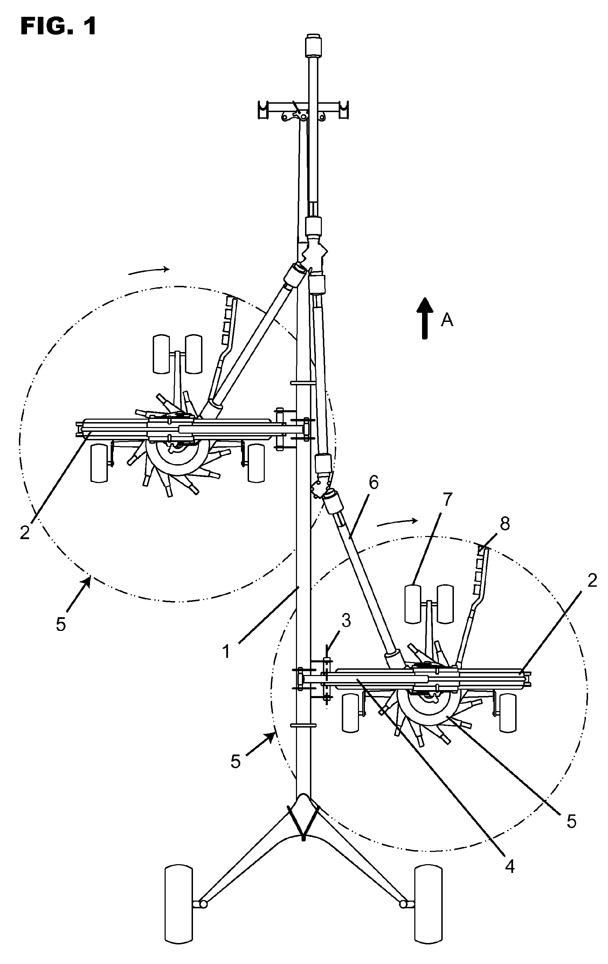

Tel que cela est représenté sur la figure 1, une andaineuse de végétaux couchés sur le sol selon l'invention comporte une structure porteuse comprenant une poutre principale (1) sur laquelle est articulé au moins un bras latéral (2) mobile autour d'un axe (3) horizontal. Le bras latéral (2) est déplaçable autour de l'axe (3) au moyen d'un vérin de repliement (4).

Le vérin de repliement (4) a pour action le déploiement et le repliement du bras latéral (2) porteur du rotor (5) d'andainage entre une position de transport dans laquelle le bras latéral (2) est sensiblement vertical et une position de travail dans lequel il est incliné vers le sol. Le bras latéral (2) peut en sus être déplacé vers une position surélevée dans laquelle le rotor (5) est soulevé du sol. Cette position surélevée est située entre la position de travail et la position de transport et elle permet, par exemple, de passer au-dessus d'un andain.

Tel que cela est illustré sur la figure 1, l'andaineuse comporte de manière classique des moyens de transmission (6) permettant l'entraînement en rotation d'une partie de chaque rotor (5) autour d'un axe sensiblement vertical en position de travail, lequel axe porte un train de roues (7) qui supporte le rotor (5). Les différents outils (8) portés par le rotor (5) sont disposés sur des bras montés dans un boîtier central qui tourne autour dudit axe sensiblement vertical.

Les outils (8), qui sont usuellement des fourches, rassemblent les fourrages coupés et disposés au sol en andains qui peuvent ensuite être ramassés par une autre machine. De manière connue plusieurs rotors sont disposés de part et d'autre de la poutre principale (1) pour couvrir une surface importante du champ et limiter le nombre d'andains à collecter dans l'étape suivante.

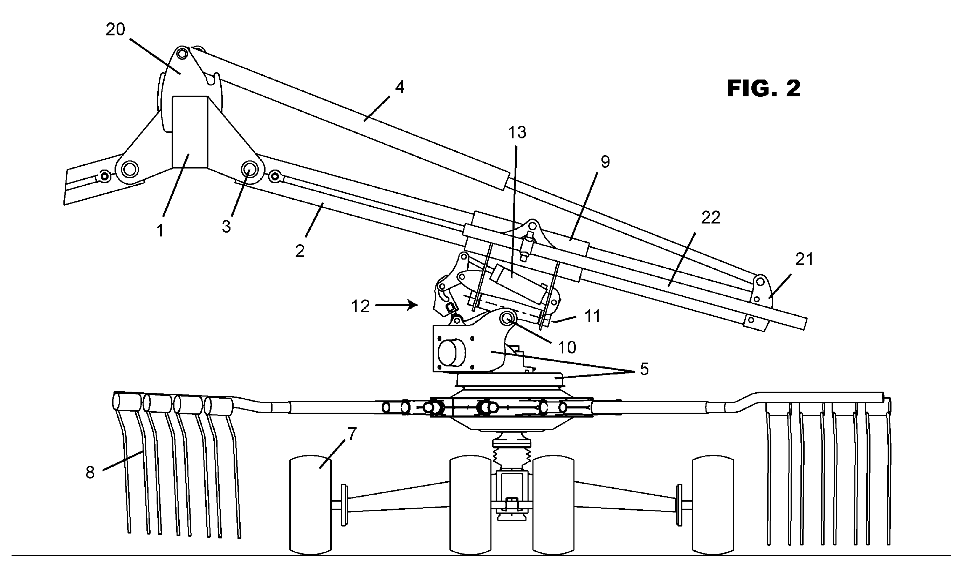

La figure 2 montre à plus grande échelle un rotor (5) en position de travail. Ce rotor (5) peut pivoter autour d'un premier axe (10) et d'un second axe (11) qui le relient à un support (9) de manière à suivre les dénivellations du sol. Le support (9) est déplaçable sur le bras latéral (2) correspondant au moyen d'un vérin hydraulique (22).

Selon l'invention les débattements du rotor (5) sont réalisables dans la position de travail autour du premier axe (10) et du second axe (11) qui sont sensiblement perpendiculaires, le premier axe (10) étant situé dans un plan parallèle au sol et orienté dans la direction d'avancement (A) de la machine, le second axe (11) étant perpendiculaire au sens d'avancement et pouvant être plus ou moins incliné par rapport à l'horizontale lorsque la machine est en position de travail.

Tel que cela est représenté sur les différentes figures, le rotor (5) est relié au support (9) par un dispositif porteur (12) comportant le premier axe (10) et le second axe (11), de manière à autoriser les débattements permettant de suivre les mouvements du terrain lorsque la machine fonctionne et se trouve en position de travail. Selon l'invention, la machine est notamment caractérisée en ce que le dispositif porteur (12) comporte un système de réglage permettant de limiter les mouvements du rotor (5) autour du premier axe (10) et du second axe (11) dans la position de travail et de les bloquer dans d'autres positions ou toute autre position.

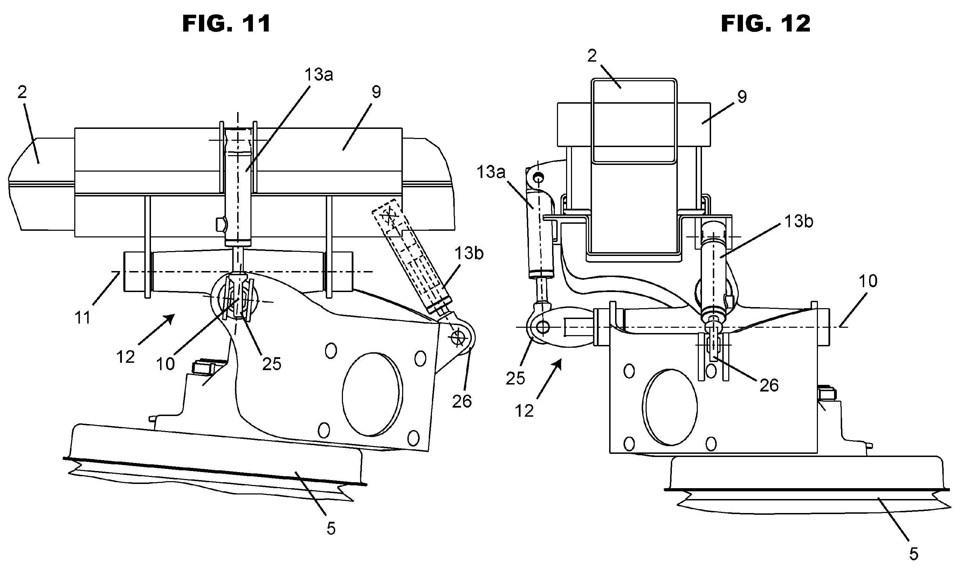

Selon l'invention, le système de réglage permettant de limiter les mouvements du rotor (5) comporte d'une part un moyen de commande comprenant au moins un vérin hydraulique (13, 13a, 13b) et d'autre part un dispositif de liaison déplaçable par le au moins un vérin hydraulique (13, 13a, 13b). Les figures 2 à 10 ainsi que 13 et 14 se rapportent à des variantes de réalisation comprenant un seul vérin hydraulique (13), tandis que les figures 11 et 12 illustrent une variante de réalisation faisant appel à deux vérins hydrauliques (13a, 13b).

Selon une caractéristique importante de l'invention, le au moins un vérin hydraulique (13, 13a, 13b) est relié d'une part au rotor (5) au moyen du dispositif de liaison et d'autre part au support (9).

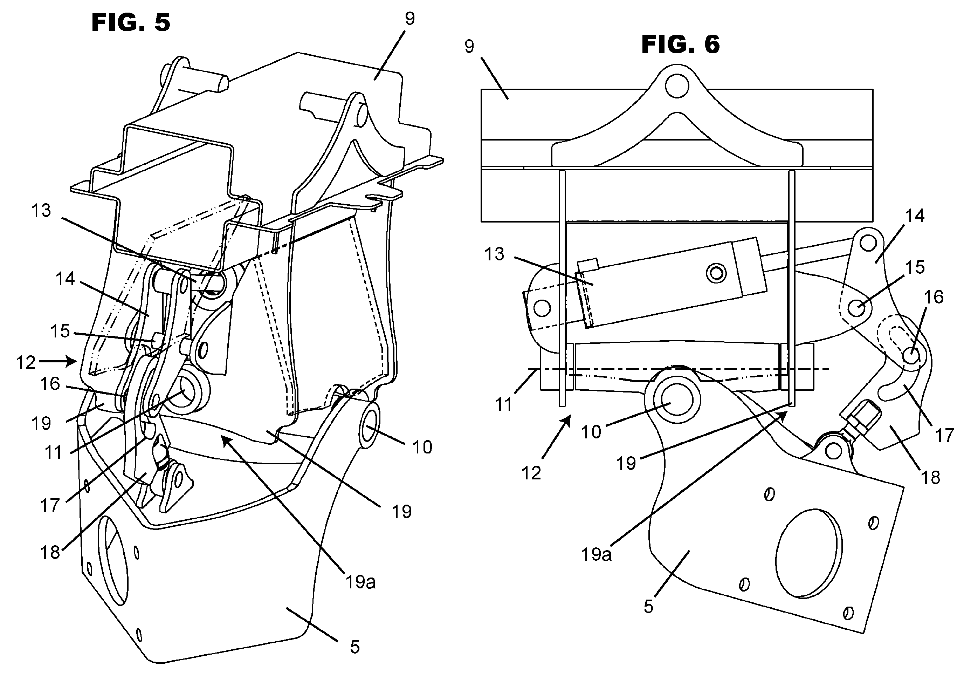

Dans la première variante de réalisation, et tel que cela est principalement détaillé sur les figures 5 et 6, le dispositif de liaison comporte une bascule (14) articulée sur un axe (15) du dispositif porteur (12). Ladite bascule (14) est en sus reliée au vérin hydraulique (13) et est apte à pivoter autour de l'axe (15) sous l'action dudit vérin hydraulique (13).

La bascule (14) comporte en sus un axe (16) qui est engagé dans un logement (17) de forme oblongue prévu dans une patte (18) articulée sur le rotor (5) et qui permet de limiter les pivotements autour du premier axe (10).

Dans cette variante de réalisation, le système de réglage comporte un moyen de butée (19a) entre le rotor (5) et le support (9) pour limiter les pivotements autour du second axe (11), lequel moyen de butée (19a) comporte deux butées (19).

Lorsque le vérin hydraulique (13) est en position déployée, tel que cela est illustré sur les figures 5 et 6, c'est-à-dire lorsque le rotor (5) est en position de travail, l'axe (16) se situe dans une position médiane dans le logement (17), un débattement de part et d'autre de cette position est donc possible. Il peut donc se produire un mouvement de rotation limité autour du premier axe (10) permettant de suivre les contours du terrain.

De même dans cette position le rotor (5) peut également disposer d'une latitude de mouvement autour du second axe (11), ce qui autorise en conséquence un débattement possible dans les trois dimensions spatiales.

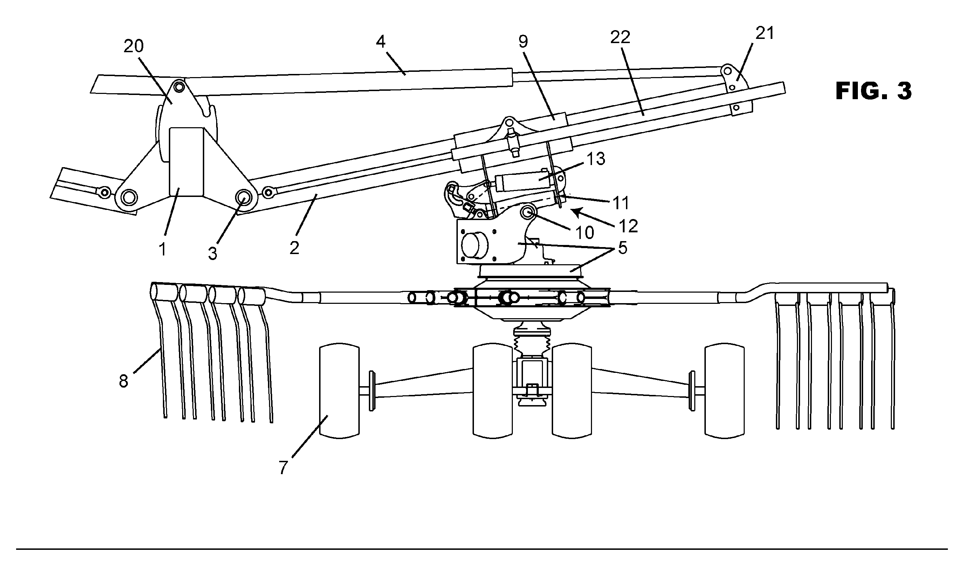

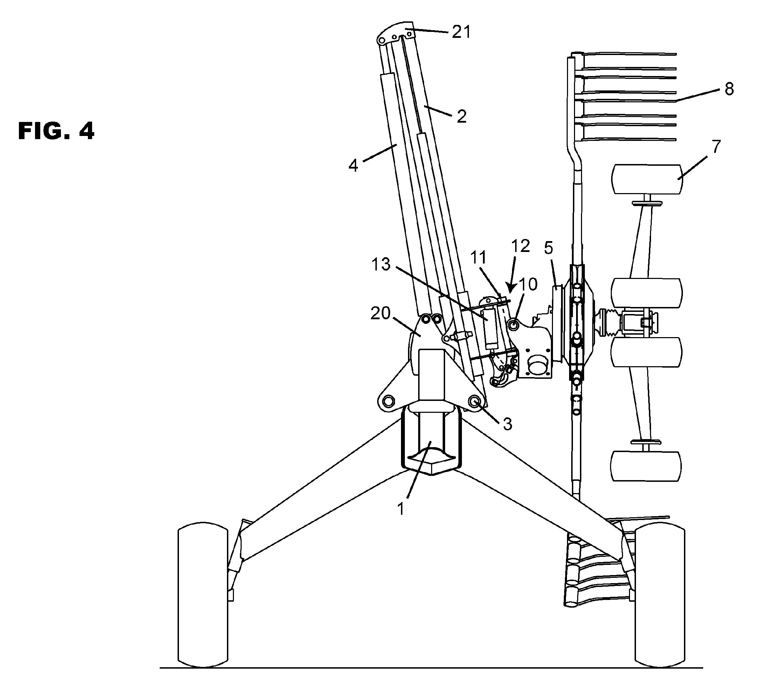

Le vérin hydraulique (13) est par exemple un vérin simple effet commandé en pression lorsqu'il doit se raccourcir. Lorsque le vérin hydraulique (13) est amené en position repliée, en contraction, tel que cela est illustré sur les figures 3 et 4, la bascule (14) est pivotée jusqu'à ce que l'axe (16) arrive en bout de course dans le logement (17) et pivote le rotor (5) vers le haut autour du premier axe (10). A ce moment là plus aucun débattement n'est possible autour du premier axe (10).

La remontée du rotor (5) en direction du support (9) a également pour effet d'amener les butées (19) prévues sur le dispositif porteur (12) au contact de la partie supérieure du rotor (5), verrouillant dans cette action la possible rotation autour du second axe (11).

L'action du vérin hydraulique (13) en contraction a ainsi pour effet de faire pivoter le rotor (5) en direction de la poutre principale (1) et de bloquer simultanément les deux débattements possibles du rotor (5) autour du premier axe (10) et du second axe (11).

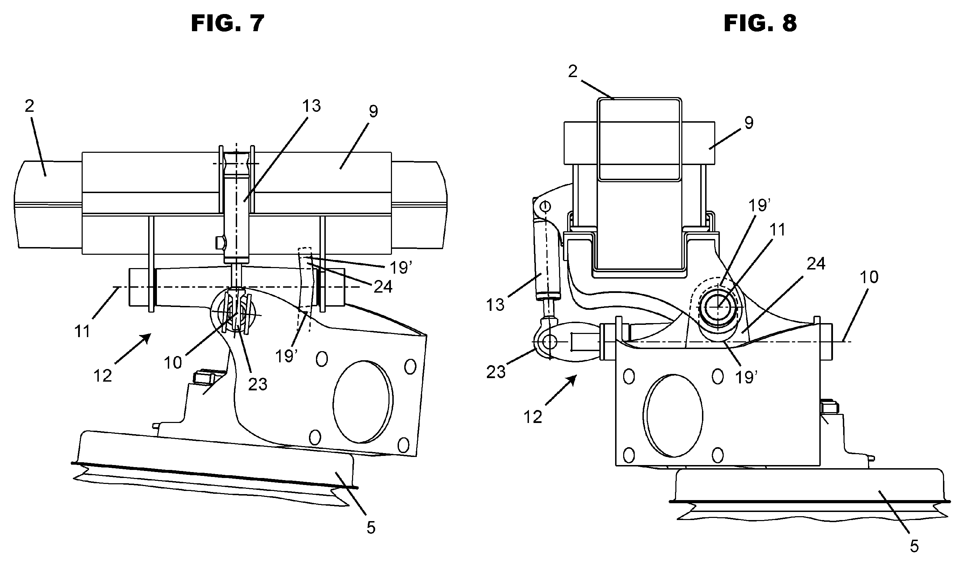

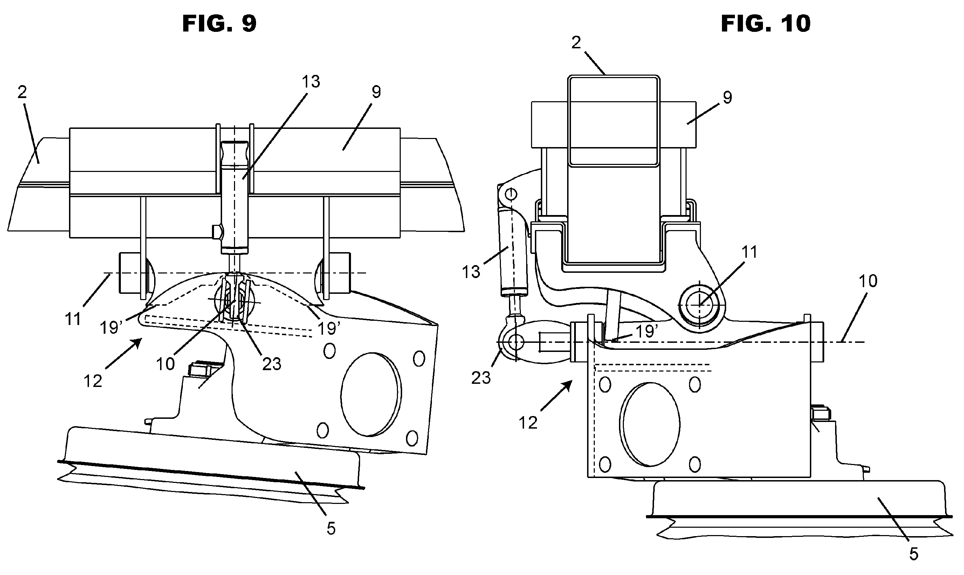

Dans les deuxième et troisième variantes de réalisation illustrées par les figures 7 à 10, le dispositif de liaison est formé par une articulation (23). Ces variantes de réalisation prévoient l'emploi d'un seul vérin hydraulique (13) et ce dernier est relié au rotor (5) par ladite articulation (23). L'articulation (23) est de préférence formée par une rotule. De plus, le vérin hydraulique (13) est disposé dans un plan passant par le premier axe (10). Dans ces deux variantes de réalisation, le système de réglage comporte deux butées (19') entre le rotor (5) et le support (9) pour limiter les pivotements autour du premier axe (10). Dans la deuxième variante de réalisation, tel que cela est représenté sur les figures 7 et 8, le second axe (11) peut se déplacer de manière limitée à l'intérieur d'un trou oblong formé dans une patte (24) solidaire du rotor (5), les extrémités du trou oblong formant les deux butées (19'). Dans la troisième variante de réalisation représentée sur les figures 9 et 10, le support (9) comporte deux faces formant les butées (19') et le rotor (5) peut venir en contact avec l'une ou l'autre de ces faces lorsqu'il pivote autour du premier axe (10). Les butées (19') sont conçues pour permettre un pivotement suffisant du rotor (5) autour du premier axe (10) pendant le travail, de manière à garantir un bon suivi de terrain.

Le vérin hydraulique (13) est par exemple un vérin simple effet commandé en pression lorsqu'il doit se raccourcir. Au travail, le vérin hydraulique (13) est flottant, c'est-à-dire qu'il n'est pas commandé en pression et il peut donc librement s'allonger et se raccourcir en fonction des mouvements du rotor autour du second axe (11). Le vérin hydraulique (13) peut être conçu de sorte qu'au travail, le pivotement du rotor autour du second axe (11) n'amène pas le vérin hydraulique (13) en position d'allongement maximal ni en position de raccourcissement maximal. Alternativement, le vérin hydraulique (13) peut être conçu pour qu'au travail, il puisse venir dans ses positions de fin de course afin de limiter les pivotements du rotor (5) autour du second axe (11). Au travail, le rotor (5) dispose par ailleurs d'une latitude de mouvement autour du premier axe (10), ce qui autorise en conséquence un débattement possible dans les trois dimensions spatiales.

Lorsque le vérin hydraulique (13) est amené en position raccourcie, en contraction, il a pour effet de faire pivoter le rotor (5) autour du second axe (11) et plus aucun débattement n'est possible autour du second axe (11). Dans la deuxième variante de réalisation, ainsi que cela peut être déduit de la figure 7, lorsque le bras latéral (2) est pivoté de la position de travail vers la position surélevée ou vers la position de transport, le poids propre du rotor (5) entraîne un déplacement de l'axe (11) à l'intérieur du trou oblong et l'axe (11) vient en appui contre la butée (19') inférieure, la plus éloignée du bras porteur (2). Ainsi qu'il ressort de la figure 9, le raccourcissement du vérin hydraulique (13) provoque, dans la troisième variante de réalisation, une mise en appui du rotor (5) contre les butées (19').

Dans la quatrième variante de réalisation illustrée par les figures 11 et 12, le dispositif de liaison est formé par des articulations (25, 26). Le moyen de commande comporte un premier vérin (13a) relié au rotor (5) par l'articulation (25) ainsi qu'un second vérin (13b) relié au rotor (5) par l'articulation (26). Les articulations (25, 26) sont de préférence formées par des rotules.

Cette quatrième variante de réalisation prévoit préférentiellement que le premier vérin hydraulique (13a) est disposé dans un plan passant par le premier axe (10) et que le second vérin hydraulique (13b) est disposé dans un plan passant par le second axe (11).

Les premier et second vérins hydrauliques (13a, 13b) sont par exemple des vérins simple effet commandés en pression lorsqu'ils doivent se raccourcir. Au travail, les premier et second vérins hydrauliques (13a, 13b) sont flottants, c'est-à-dire qu'ils ne sont pas commandés en pression et ils peuvent donc librement s'allonger et se raccourcir en fonction des mouvements du rotor autour du premier axe (10) et du second axe (11).

Le premier vérin hydraulique (13a) peut être conçu de sorte qu'au travail, le pivotement du rotor autour du second axe (11) n'amène pas le premier vérin hydraulique (13a) en position d'allongement maximal ni en position de raccourcissement maximal. Alternativement, le premier vérin hydraulique (13a) peut être conçu pour qu'au travail, il puisse venir dans ses positions de fin de course afin de limiter les pivotements du rotor (5) autour du second axe (11). Le second vérin hydraulique (13b) peut être conçu de sorte qu'au travail, le pivotement du rotor autour du premier axe (10) n'amène pas le second vérin hydraulique (13b) en position d'allongement maximal ni en position de raccourcissement maximal. Alternativement, le second vérin hydraulique (13b) peut être conçu pour qu'au travail, il puisse venir dans ses positions de fin de course afin de limiter les pivotements du rotor (5) autour du premier axe (10). Au travail, le rotor (5) dispose donc d'une certaine latitude de mouvement autour du premier axe (10) et du second axe (11), ce qui autorise en conséquence un débattement possible dans les trois dimensions spatiales.

Lorsque le premier vérin hydraulique (13a) est amené en position raccourcie, en contraction, il a pour effet de faire pivoter le rotor (5) autour du second axe (11) et plus aucun débattement n'est possible autour du second axe (11). Lorsque le second vérin hydraulique (13b) est amené en position raccourcie, en contraction, il a pour effet de faire pivoter le rotor (5) en direction de la poutre principale (1) autour du premier axe (10) et plus aucun débattement n'est possible autour du premier axe (10). Ainsi, l'action des premier et second vérins hydrauliques (13a, 13b) en contraction bloque simultanément les deux débattements possibles du rotor (5) autour du premier axe (10) et du second axe (11).

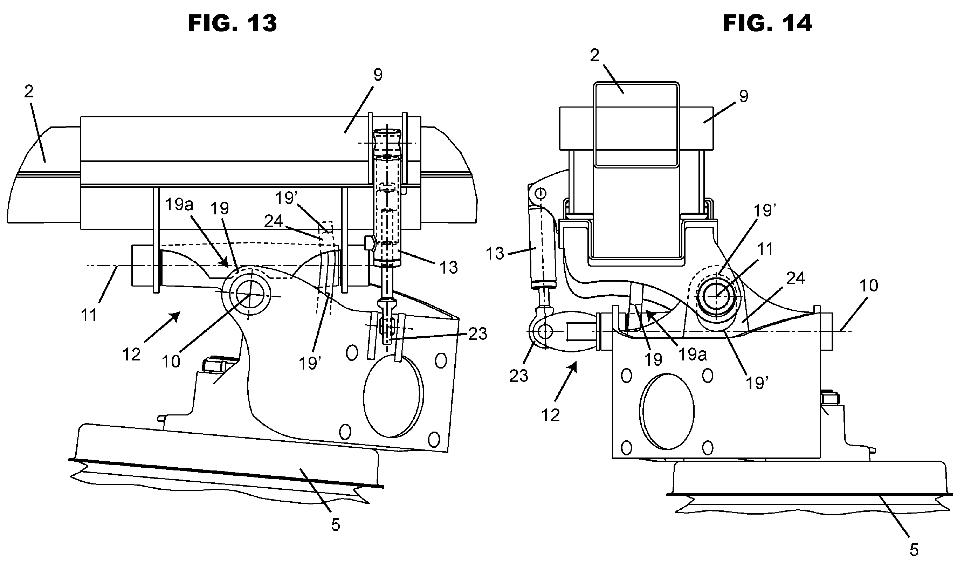

Dans la cinquième variante de réalisation illustrée par les figures 13 et 14, le dispositif de liaison est formé par une articulation (23). Cette variante de réalisation prévoit l'emploi d'un seul vérin hydraulique (13) et ce dernier est relié au rotor (5) par ladite articulation (23). L'articulation (23) est de préférence formée par une rotule. De plus, le vérin hydraulique (13) est disposé dans un plan oblique par rapport à la direction d'avancement (A). La machine étant vue de dessus, ce plan forme avec un plan parallèle à la direction d'avancement (A), un angle compris entre environ 10° et 80°, par exemple environ 45°.

Dans cette variante de réalisation, le système de réglage comporte deux butées (19') situées entre le rotor (5) et le support (9) afin de limiter les pivotements autour du premier axe (10). De plus, le système de réglage comporte un moyen de butée (19a) comportant une butée (19) située entre le rotor (5) et le support (9) afin de limiter les pivotements autour du second axe (11). Le second axe (11) peut se déplacer de manière limitée à l'intérieur d'un trou oblong formé dans une patte (24) solidaire du rotor (5), les extrémités du trou oblong formant les deux butées (19'). La butée (19) est formée par une face d'appui solidaire du support (9) contre laquelle le premier axe (10) peut venir en contact.

Le vérin hydraulique (13) est par exemple un vérin simple effet commandé en pression lorsqu'il doit se raccourcir. Au travail, le vérin hydraulique (13) est flottant, c'est-à-dire qu'il n'est pas commandé en pression et il peut donc librement s'allonger et se raccourcir en fonction des mouvements du rotor autour du premier axe (10) et du second axe (11). Au travail, le rotor (5) dispose donc d'un débattement possible dans les trois dimensions spatiales.

Lorsque le vérin hydraulique (13) est amené en position raccourcie, en contraction, il a pour effet, en raison de son positionnement dans un plan oblique, de faire pivoter le rotor (5) en direction de la poutre principale (1) autour à la fois du premier axe (10) et du second axe (11). Le premier axe (10) vient alors en appui contre la butée (19) tandis que le second axe (11) vient en appui contre la butée (19') inférieure, la plus éloignée du bras porteur (2). Il en résulte que plus aucun débattement n'est possible autour du premier axe (10) et du second axe (11).

Le support (9) peut coulisser sous l'action du vérin hydraulique (22) le long du bras latéral (2) de manière à positionner le rotor (5) aussi favorablement que possible en fonction du nombre de rotors utilisés et de la configuration souhaitée pour le travail.

La figure 3 montre un rotor en position surélevée pour passer par-dessus un obstacle ou pour les manoeuvres en bout de terrain. Dans cette position, le vérin hydraulique (13) et la bascule (14) sont actionnés pour maintenir le rotor (5) immobile dans une position sensiblement horizontale, intermédiaire entre la position de travail et la position de transport. Dans les deuxième et troisième variantes de réalisation, cette position surélevée sensiblement horizontale peut être obtenue en concevant les butées (19'), contre lesquelles le rotor vient alors en appui, de manière appropriée. Dans la quatrième variante de réalisation, les premier et second vérins hydrauliques (13a, 13b) sont actionnés pour maintenir le rotor (5) immobile dans cette position sensiblement horizontale. Dans la cinquième variante de réalisation, le rotor (5) est maintenu immobile dans cette position sensiblement horizontale en actionnant le vérin hydraulique (13).

La figure 4 montre le rotor en position de transport. Le rotor (5) est relevé et le bras latéral (2) est dans une position sensiblement verticale. De plus, le rotor (5) est déplacé le long du bras latéral (2) vers la poutre principale (1) afin de réduire la hauteur de la machine.

Le passage entre la position de travail, la position intermédiaire et la position de transport est effectué sous l'action du vérin de repliement (4). Le positionnement de ce vérin (4) par rapport à la poutre principale (1) et par rapport au bras latéral (2) est bien visible sur les figures 2 à 4.

Ainsi, selon l'invention le vérin de repliement (4) du bras latéral (2) porteur du rotor (5) est disposé entre un élément de liaison (20) avec la poutre principale (1) et sensiblement l'extrémité extérieure (21) dudit bras latéral (2), de manière à permettre le déplacement du bras latéral (2) entre une position inclinée vers le sol, la position de travail, et une position de transport dans laquelle le bras latéral (2) se trouve plus ou moins à la verticale par rapport au sol, le déplacement s'effectuant en une rotation autour de l'axe (3).

De manière avantageuse le vérin de repliement (4) et le ou les vérins hydrauliques (13, 13a, 13b) du moyen de commande sont synchronisés de manière à ce que le mouvement du bras latéral (2) vers la position verticale entraîne un déplacement en contraction du ou des vérins hydrauliques (13, 13a, 13b) permettant le blocage des débattements possibles du rotor (5).

Grâce à la synchronisation, le repliement partiel du bras latéral (2) pour amener le vérin de repliement (4) dans une position sensiblement horizontale par rapport au sol conduit à une contraction du ou des vérins hydrauliques (13, 13a, 13b) pour amener le rotor (5) dans une position également sensiblement horizontale, soulevée au dessus du sol, de manière à permettre, par exemple, le passage d'un obstacle.

La synchronisation permet aussi d'obtenir que le mouvement du bras latéral (2) vers la position de travail, par allongement du vérin hydraulique (4), entraîne un déplacement en allongement du ou des vérins hydrauliques (13, 13a, 13b) en vue du déblocage du rotor (5) dès qu'il arrive en position de travail.

Plusieurs variantes sont possibles, l'andaineuse peut notamment comporter un nombre variable de rotors (5) et des outils (8) de différentes natures, les dimensions des rotors (5) peuvent être plus ou moins importantes et ceux-ci être placés plus ou moins haut par rapport au sol sans sortir du cadre de l'invention.

En ce qui concerne le système de réglage permettant de limiter le déplacement du rotor (5), les différentes pièces peuvent être conformées de différentes manières et disposées éventuellement selon une autre configuration dans le système de réglage, notamment pour ce qui concerne les points de fixation sur le support (9), la forme des butées (19, 19') ou de la bascule (14), ou encore l'amplitude du ou des vérins hydrauliques (13, 13a, 13b), sans sortir du cadre de l'invention.

La description précédente de l'invention est relative à un rotor d'andainage (5) par bras latéral (2) porteur, il est cependant tout à fait possible d'envisager des machines de grande largeur avec plusieurs rotors (5) portés par un même bras (2), sans sortir du cadre de l'invention.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Machine de fenaison, plus particulièrement une andaineuse de végétaux couchés sur le sol, comportant une structure porteuse comprenant une poutre principale (1) sur laquelle est articulé au moins un bras latéral (2) supportant au moins un rotor (5) d'andainage, lequel rotor (5) est relié à un dispositif porteur (12) formant interface avec un support (9) monté sur ledit bras latéral (2), lequel dispositif porteur (12) permet au rotor (5) des débattements afin de suivre les mouvements du terrain lorsque la machine fonctionne et se trouve en position de travail, le dispositif porteur (12) comportant un système de réglage permettant de limiter les mouvements du rotor (5) dans la position de travail et de les bloquer dans d'autres positions, la machine étant ***caractérisée en ce que*** le système de réglage permettant de limiter les mouvements du rotor (5) comporte d'une part un moyen de commande comprenant au moins un vérin hydraulique (13, 13a, 13b) et d'autre part un dispositif de liaison déplaçable par le au moins un vérin hydraulique (13, 13a, 13b).

2. Machine de fenaison selon la revendication 1, ***caractérisée par le fait que*** le au moins un vérin hydraulique (13, 13a, 13b) est relié d'une part au rotor (5) au moyen du dispositif de liaison et d'autre part au support (9).

3. Machine de fenaison selon la revendication 1, ***caractérisée par le fait que*** le dispositif porteur (12) comporte un premier axe (10) dirigé dans la direction d'avancement (A).

4. Machine de fenaison selon la revendication 1, ***caractérisée par le fait que*** le dispositif porteur (12) comporte un second axe (11) perpendiculaire à la direction d'avancement (A).

5. Machine de fenaison selon la revendication 2, ***caractérisée par le fait que*** le dispositif de liaison comporte une bascule (14) articulée avec le support (9), déplaçable par le vérin hydraulique (13).

6. Machine de fenaison selon la revendication 5, ***caractérisée par le fait que*** la bascule (14) comporte un axe (16) qui est engagé dans un logement (17) de forme oblongue prévu dans une patte (18) articulée sur le rotor (5) et qui permet de limiter les pivotements autour du premier axe (10).

7. Machine de fenaison selon la revendication 6, ***caractérisée par le fait que*** l'action du vérin hydraulique (13) en contraction fait pivoter le rotor (5) en direction de la poutre principale (1) autour du premier axe (10).

8. Machine de fenaison selon la revendication 3, ***caractérisée par le fait que*** le dispositif de liaison est formé par une articulation (23) et que le vérin hydraulique (13) est disposé dans un plan passant par le premier axe (10).

9. Machine de fenaison selon la revendication 4, ***caractérisée par le fait que*** l'action du vérin hydraulique (13) en contraction fait pivoter le rotor (5) autour du second axe (11).

10. Machine de fenaison selon l'une quelconque des revendications 2 à 4, ***caractérisée par le fait que*** le dispositif de liaison est formé par des articulations (25, 26) et que le moyen de commande comporte un premier vérin hydraulique (13a) et un second vérin hydraulique (13b) reliés chacun par l'une respectivement l'autre desdites articulations (25, 26) au rotor (5).

11. Machine de fenaison selon la revendication 10, ***caractérisée par le fait que*** le premier vérin hydraulique (13a) est disposé dans un plan passant par le premier axe (10) et que le second vérin hydraulique (13b) est disposé dans un plan passant par le second axe (11).

12. Machine de fenaison selon la revendication 11, ***caractérisée par le fait que*** l'action du premier vérin hydraulique (13a) en contraction fait pivoter le rotor (5) autour du second axe (11) et que l'action du second vérin hydraulique (13b) en contraction fait pivoter le rotor (5) en direction de la poutre principale (1) autour du premier axe (10).

13. Machine de fenaison selon l'une quelconque des revendications 3 ou 4, ***caractérisée par le fait que*** le dispositif de liaison est formé par une articulation (23) et que le vérin hydraulique (13) est disposé dans un plan oblique par rapport à la direction d'avancement (A).

14. Machine de fenaison selon la revendication 13, ***caractérisée par le fait que*** l'action du vérin hydraulique (13) en contraction fait pivoter le rotor (5) en direction de la poutre principale (1) simultanément autour du premier axe (10) et autour du second axe (11).

15. Machine de fenaison selon la revendication 3, ***caractérisée par le fait que*** le système de réglage comporte des butées (19') entre le rotor (5) et le support (9) pour limiter les pivotements autour du premier axe (10).

16. Machine de fenaison selon la revendication 4, ***caractérisée par le fait que*** le système de réglage comporte un moyen de butée (19a) entre le rotor (5) et le support (9) pour limiter les pivotements autour du second axe (11), lequel moyen de butée (19a) comporte au moins une butée (19).

17. Machine de fenaison selon l'une quelconque des revendications 1 à 16, ***caractérisée par le fait qu***'un vérin de repliement (4) du bras latéral (2) du rotor (5) est disposé entre un élément de liaison (20) avec la poutre principale (1) et sensiblement l'extrémité (21) dudit bras latéral (2), de manière à permettre le déplacement du bras latéral (2) entre une position inclinée vers le sol et une position de transport dans laquelle le bras latéral (2) se trouve sensiblement à la verticale par rapport au sol, le déplacement s'effectuant en une rotation autour de l'axe (3).

18. Machine de fenaison selon la revendication 17, ***caractérisée par le fait que*** le vérin de repliement (4) et le ou les vérins hydrauliques (13, 13a, 13b) du moyen de commande sont synchronisés de manière à ce que le mouvement du bras latéral (2) vers la position verticale entraîne un déplacement en contraction du ou des vérins hydrauliques (13, 13a, 13b) permettant le blocage des débattements possibles du rotor (5).

19. Machine de fenaison selon la revendication 18, ***caractérisée par le fait qu**'*un repliement partiel du vérin de repliement (4) pour amener le bras latéral (2) dans une position sensiblement horizontale par rapport au sol conduit à une contraction du ou des vérins hydrauliques (13, 13a, 13b) pour amener le rotor (5) dans une position également sensiblement horizontale, soulevée au-dessus du sol, de manière à permettre, par exemple, le passage d'un obstacle.

20. Machine de fenaison selon la revendication 17, ***caractérisée par le fait que*** le vérin de repliement (4) et le ou les vérins hydrauliques (13, 13a, 13b) du moyen de commande sont synchronisés de manière à ce que le mouvement du bras latéral (2) vers la position de travail entraîne un déplacement en allongement du ou des vérins hydrauliques (13, 13a, 13b) en vue du déblocage du rotor (5).

## Patentansprüche

1. Heuwerbungsmaschine, insbesondere ein Schwader für auf dem Boden liegende Pflanzen mit einem Tragwerk, das einen Hauptbalken (1) umfasst, an dem mindestens ein seitlicher Arm (2) angelenkt ist, der mindestens einen Schwadrotor (5) trägt, wobei der Rotor (5) mit einer Tragvorrichtung (12) verbunden ist, die eine Schnittstelle mit einer Auflage (9) bildet, die am seitlichen Arm (2) befestigt ist, wobei die Tragvorrichtung (12) dem Rotor (5) einen Ausschlag ermöglicht, um den Bodenunebenheiten zu folgen, wenn die Maschine in Betrieb ist und sich in Arbeitsstellung befindet, wobei die Tragvorrichtung (12) ein Einstellsystem umfasst, das es ermöglicht, die Bewegungen des Rotors (5) in der Arbeitsstellung zu begrenzen und sie in anderen Stellungen zu blockieren, wobei die Maschine ***dadurch gekennzeichnet ist,* dass** das Einstellsystem, das es ermöglicht, die Bewegungen des Rotors (5) zu begrenzen, einerseits ein Betätigungsmittel umfasst, das mindestens einen Hydraulikzylinder (13, 13a, 13b) umfasst, und andererseits eine Verbindungsvorrichtung, die von dem mindestens einen Hydraulikzylinder (13, 13a, 13b) verschoben werden kann.

2. Heuwerbungsmaschine nach Anspruch 1, ***dadurch gekennzeichnet,* dass** der mindestens eine Hydraulikzylinder (13, 13a, 13b) einerseits mit dem Rotor (5) mittels der Verbindungsvorrichtung verbunden ist und andererseits mit der Auflage (9).

3. Heuwerbungsmaschine nach Anspruch 1, ***dadurch gekennzeichnet,* dass** die Tragvorrichtung (12) eine erste Achse (10) umfasst, die in Vorschubrichtung (A) ausgerichtet ist.

4. Heuwerbungsmaschine nach Anspruch 1, ***dadurch gekennzeichnet,* dass** die Tragvorrichtung (12) eine zweite Achse (11) umfasst, die senkrecht zur Vorschubrichtung (A) ausgerichtet ist.

5. Heuwerbungsmaschine nach Anspruch 2, ***dadurch gekennzeichnet,* dass** die Verbindungsvorrichtung einen Hebel (14) umfasst, der an die Auflage (9) angelenkt ist und vom Hydraulikzylinder (13) verschoben werden kann.

6. Heuwerbungsmaschine nach Anspruch 5, ***dadurch gekennzeichnet,* dass** der Hebel (14) eine Achse (16) umfasst, die in eine Aufnahme (17) mit länglicher Form eingefügt ist, welche in einem Lappen (18) vorgesehen ist, der an den Rotor (5) angelenkt ist und es ermöglicht, das Schwenken um die erste Achse (10) zu begrenzen.

7. Heuwerbungsmaschine nach Anspruch 6, ***dadurch gekennzeichnet,* dass** die Wirkung des Hydraulikzylinders (13) beim Zusammenziehen den Rotor (5) in Richtung Hauptbalken (1) rund um die erste Achse (10) schwenken lässt.

8. Heuwerbungsmaschine nach Anspruch 3, ***dadurch gekennzeichnet,* dass** die Verbindungsvorrichtung von einem Gelenk (23) gebildet wird und dass der Hydraulikzylinder (13) in einer Ebene angeordnet ist, die durch die erste Achse (10) verläuft.

9. Heuwerbungsmaschine nach Anspruch 4, ***dadurch gekennzeichnet,* dass** die Wirkung des Hydraulikzylinders (13) beim Zusammenziehen den Rotor (5) um die zweite Achse (11) schwenken lässt.

10. Heuwerbungsmaschine nach irgend einem der Ansprüche 2 bis 4, ***dadurch gekennzeichnet,* dass** die Verbindungsvorrichtung von Gelenken (25, 26) gebildet wird und dass das Betätigungsmittel einen ersten Hydraulikzylinder (13a) und einen zweiten Hydraulikzylinder (13b) umfasst, die jeweils durch das eine beziehungsweise das andere der Gelenke (25, 26) mit dem Rotor (5) verbunden sind.

11. Heuwerbungsmaschine nach Anspruch 10, ***dadurch gekennzeichnet,* dass** der erste Hydraulikzylinder (13a) in einer Ebene angeordnet ist, die durch die erste Achse (10) verläuft, und dass der zweite Hydraulikzylinder (13b) in einer Ebene angeordnet ist, die durch die zweite Achse (11) verläuft.

12. Heuwerbungsmaschine nach Anspruch 11, ***dadurch gekennzeichnet,* dass** die Wirkung des ersten Hydraulikzylinders (13a) beim Zusammenziehen den Rotor (5) rund um die zweite Achse (11) schwenken lässt und dass die Wirkung des zweiten Hydraulikzylinders (13b) beim Zusammenziehen den Rotor (5) in Richtung Hauptbalken (1) rund um die erste Achse (10) schwenken lässt.

13. Heuwerbungsmaschine nach Anspruch 3 oder 4, ***dadurch gekennzeichnet,* dass** die Verbindungsvorrichtung von einem Gelenk (23) gebildet wird und dass der Hydraulikzylinder (13) in einer Ebene angeordnet ist, die in Bezug auf die Vorschubrichtung (A) schief ist.

14. Heuwerbungsmaschine nach Anspruch 13, ***dadurch gekennzeichnet,* dass** die Wirkung des Hydraulikzylinders (13) beim Zusammenziehen den Rotor (5) in Richtung Hauptbalken (1) gleichzeitig rund um die erste Achse (10) und die zweite Achse (11) schwenken lässt.

15. Heuwerbungsmaschine nach Anspruch 3, ***dadurch gekennzeichnet,* dass** das Einstellsystem Anschläge (19') zwischen dem Rotor (5) und der Auflage (9) umfasst, um das Schwenken um die erste Achse (10) zu begrenzen.

16. Heuwerbungsmaschine nach Anspruch 4, ***dadurch gekennzeichnet,* dass** das Einstellsystem ein Anschlagmittel (19a) zwischen dem Rotor (5) und der Auflage (9) umfasst, um das Schwenken um die zweite Achse (11) zu begrenzen, wobei das Anschlagmittel (19a) mindestens einen Anschlag (19) umfasst.

17. Heuwerbungsmaschine nach irgend einem der Ansprüche 1 bis 16, ***dadurch gekennzeichnet,* dass** ein Klappzylinder (4) des seitlichen Arms (2) des Rotors (5) zwischen einem Verbindungsteil (20) mit dem Hauptbalken (1) und im Wesentlichen dem Ende (21) des seitlichen Arms (2) angeordnet ist, um die Verschiebung des seitlichen Arms (2) zwischen einer zum Boden geneigten Stellung und einer Transportstellung zu ermöglichen, in der sich der seitliche Arm (2) im Wesentlichen vertikal in Bezug auf den Boden befindet, wobei die Verschiebung in einer Drehung um die Achse (3) erfolgt.

18. Heuwerbungsmaschine nach Anspruch 17, ***dadurch gekennzeichnet,* dass** der Klappzylinder (4) und der oder die Hydraulikzylinder (13, 13a, 13b) des Betätigungsmittels synchronisiert sind, so dass die Bewegung des seitlichen Arms (2) in die vertikale Stellung eine zusammenziehende Verschiebung des oder der Hydraulikzylinder (13, 13a, 13b) nach sich zieht, was ein Blockieren des möglichen Ausschlags des Rotors (5) ermöglicht.

19. Heuwerbungsmaschine nach Anspruch 18, ***dadurch gekennzeichnet,* dass** ein teilweises Zusammenklappen des Klappzylinders (4), um den seitlichen Arm (2) in eine im Wesentlichen horizontale Stellung in Bezug auf den Boden zu bringen, zu einem Zusammenziehen des oder der Hydraulikzylinder (13, 13a, 13b) führt, um den Rotor (5) in eine ebenfalls im Wesentlichen horizontale Stellung zu bringen, angehoben über dem Boden, so dass zum Beispiel das Überwinden eines Hindernisses ermöglicht wird.

20. Heuwerbungsmaschine nach Anspruch 17, ***dadurch gekennzeichnet,* dass** der Klappzylinder (4) und der oder die Hydraulikzylinder (13, 13a, 13b) des Betätigungsmittels synchronisiert sind, so dass die Bewegung des seitlichen Arms (2) in die Arbeitsstellung eine ausdehnende Verschiebung des oder der Hydraulikzylinder (13, 13a, 13b) im Hinblick auf die Entriegelung des Rotors (5) nach sich zieht.

## Claims

1. Haymaking machine, more particularly a windrower for plants lying on the ground, comprising a support structure including a main beam (1) on which is articulated at least one lateral arm (2) supporting at least one windrowing rotor (5), which rotor (5) is connected to a support device (12) forming an interface with a support (9) mounted on the said lateral arm (2), which support device (12) allows displacements for the rotor (5) so as to follow the movements of the terrain when the machine is in operation and is in work position, the support device (12) comprising an adjustment system making it possible to limit the movements of the rotor (5) in the work position and to block them in other positions, the machine being ***characterized in* that** the adjustment system allowing to limit the movements of the rotor (5) comprises on the one hand a control means including at least one hydraulic jack (13, 13a, 13b), and on the other hand a connecting device movable by the at least one hydraulic jack (13, 13a, 13b).

2. Haymaking machine according to Claim 1, ***characterized in* that** the at least one hydraulic jack (13, 13a, 13b) is connected on the one hand to the rotor (5) by means of the connecting device, and on the other hand to the support (9).

3. Haymaking machine according to Claim 1, ***characterized in* that** the support device (12) comprises a first axis (10) directed in the direction of advance (A).

4. Haymaking machine according to Claim 1, ***characterized in* that** the support device (12) comprises a second axis (11) perpendicular to the direction of advance (A).

5. Haymaking machine according to Claim 2, ***characterized in* that** the connecting device comprises a rocker (14) articulated with the support (9), movable by the hydraulic jack (13).

6. Haymaking machine according to Claim 5, ***characterized in* that** the rocker (14) comprises an axis (16) which is engaged in a housing (17) of oblong shape provided in a lug (18) articulated on the rotor (5) and which makes it possible to limit the pivoting movements around the first axis (10).

7. Haymaking machine according to Claim 6, ***characterized in* that** the action of the hydraulic jack (13) in contraction causes the rotor (5) to pivot in the direction of the main beam (1) around the first axis (10).

8. Haymaking machine according to Claim 3, ***characterized in* that** the connecting device is formed by an articulation (23) and that the hydraulic jack (13) is arranged in a plane passing through the first axis (10).

9. Haymaking machine according to Claim 4, ***characterized in* that** the action of the hydraulic jack (13) in contraction causes the rotor (5) to pivot around the second axis (11).

10. Haymaking machine according to any one of Claims 2 to 4, ***characterized in* that** the connecting device is formed by articulations (25, 26) and that the control means comprises a first hydraulic jack (13a) and a second hydraulic jack (13b) each connected by one or respectively the other of the said articulations (25, 26) to the rotor (5).

11. Haymaking machine according to Claim 10, ***characterized in* that** the first hydraulic jack (13a) is arranged in a plane passing through the first axis (10) and that the second hydraulic jack (13b) is arranged in a plane passing through the second axis (11).

12. Haymaking machine according to Claim 11, ***characterized in* that** the action of the first hydraulic jack (13a) in contraction causes the rotor (5) to pivot around the second axis (11) and that the action of the second hydraulic jack (13b) in contraction causes the rotor (5) to pivot in the direction of the main beam (1) around the first axis (10).

13. Haymaking machine according to Claim 3 or 4, ***characterized in* that** the connecting device is formed by an articulation (23) and that the hydraulic jack (13) is arranged in an oblique plane with respect to the direction of advance (A).

14. Haymaking machine according to Claim 13, ***characterized in* that** the action of the hydraulic jack (13) in contraction causes the rotor (5) to pivot in the direction of the main beam (1) simultaneously around the first axis (10) and around the second axis (11).

15. Haymaking machine according to Claim 3, ***characterized in* that** the adjustment system comprises stops (19') between the rotor (5) and the support (9) to limit the pivoting movements around the first axis (10).

16. Haymaking machine according to Claim 4, ***characterized in* that** the adjustment system comprises a stop means (19a) between the rotor (5) and the support (9) to limit the pivoting movements around the second axis (11), which stop means (19a) comprises at least one stop (19).

17. Haymaking machine according to any one of Claims 1 to 16, ***characterized in* that** a folding jack (4) of the lateral arm (2) of the rotor (5) is arranged between a connecting element (20) with the main beam (1) and substantially the end (21) of the said lateral arm (2), so as to make the movement of the lateral arm (2) between a position inclined towards the ground and a transport position in which the lateral arm (2) is situated substantially vertically with respect to the ground possible, the movement being carried out in a rotation around the axis (3).

18. Haymaking machine according to Claim 17, ***characterized in* that** the folding jack (4) and the hydraulic jack or jacks (13, 13a, 13b) of the control means are synchronised such that the movement of the lateral arm (2) towards the vertical position brings about a movement in contraction of the hydraulic jack or jacks (13, 13a, 13b) allowing to block the possible movements of the rotor (5).

19. Haymaking machine according to Claim 18, ***characterized in* that** a partial folding of the folding jack (4) to bring the lateral arm (2) into a substantially horizontal position with respect to the ground leads to a contraction of the hydraulic jack or jacks (13, 13a, 13b) to bring the rotor (5) in a likewise substantially horizontal position, raised above the ground, so as to allow, for example, to pass over an obstacle.

20. Haymaking machine according to Claim 17, ***characterized in* that** the folding jack (4) and the hydraulic jack or jacks (13, 13a, 13b) of the control means are synchronised such that the movement of the lateral arm (2) towards the work position brings about a movement in lengthening of the hydraulic jack or jacks (13, 13a, 13b) in order to unblock the rotor (5).
